# EUROPEAN PATENT APPLICATION

(11) **EP 1 557 453 A2**
(43) Date of publication of application: **27.07.2005**
(21) Application number: 05075078.5
(22) Date of filing: 17.01.2005
(51) Int. Cl.: C09J 11/00, C09J 11/04, C09J 11/06, C08K 5/098, C09J 133/14

(54) **Adhesive material and use therefor**

(30) Priority: 20.01.2004 US 537640 P
(71) Applicant: L & L Products, Inc., Romeo, MI 48065 (US)
(72) Inventor: FERNG, William B, Novi MI 48374 (US); HARRISON, Jr., Edward, Sterling Heights MI 48314 (US)
(74) Representative: Bawden, Peter Charles

(57) **Abstract**

An adhesive material (22) and at least one use for the adhesive material (22) are disclosed. The material (22) includes one or more of a polymeric admixture; a blowing agent; a curing agent; a metallic coagent and a filler.

## Description

### CLAIM OF BENEFIT OF FILING DATE

The present application claims the benefit of the filing date of U.S. Provisional Application Serial No. 60/537,640, filed January 20, 2004 and U.S. Application Serial No. to be assigned (attorney docket no. 1001-156), filed December 29, 2004, both of which are hereby incorporated by reference for all purposes.

### FIELD OF THE INVENTION

The present invention relates generally to an adhesive material. More preferably, the present invention relates to an adhesive material that exhibits a property such as resistance to adhesive degradation.

### BACKGROUND OF THE INVENTION

For many years, industry has been concerned with designing materials such as adhesives, baffle materials, structural materials, combinations thereof or the like, which exhibit desired characteristics particularly under adverse conditions. As an example, the transportation industry and, particularly, the automotive industry has been concerned with designing adhesive materials that maintain a relatively high degree of adhesion despite exposure to volatile substances such as fuel (e.g., hydrocarbon fuel). Thus, the present invention seeks to provide an adhesive material that exhibits at least one desired characteristic under one or more adverse conditions and also seeks to provide applications for the adhesive material that take advantage of at least one desired characteristic.

### SUMMARY OF THE INVENTION

The present invention provides an adhesive material. The adhesive material typically includes a combination of two or more of the following: polymeric admixture, one or more blowing agents, one or more curing agents, one or more fillers, one or more additives and one or more metallic coagents (e.g., a zinc diacrylate or a zinc methacrylate). One polymeric admixture typically includes one or more acetates, one or more acrylates or both.

### BRIEF DESCRIPTION OF THE DRAWINGS

The features and inventive aspects of the present invention will become more apparent upon reading the following detailed description, claims, and drawings, of which the following is a brief description:
Fig. 1 is a perspective view of two exemplary components adhered to each other with adhesive material of the present invention
Fig. 2 is a perspective view of an automotive vehicle having components that may be suitable adhered to each other with the adhesive material of the present invention.
Fig. 3 is a sectional view of an exemplary fuel filler assembly employing the adhesive of the present invention.

### DETAILED DESCRIPTION OF THE INVENTION

The present invention is predicated upon providing an improved adhesive material, and articles incorporating the same. The adhesive material typically expands upon activation by heat or other condition, although not required. Preferably, the adhesive material can exhibit relatively high levels of adhesion or other desirable characteristics after exposure to one or more adverse conditions such as exposure to volatile materials (e.g., fuel), exposure to high temperatures, low temperatures or cycles of both, exposure to stresses particularly repeated stresses, exposure to relatively high humidity, exposure to salt water (e.g., a salt water bath), combinations thereof or the like. Generally, it has been found that the adhesive material of the present invention is particularly useful in applications such as providing adhesive securing, sound absorption, baffling, vibration absorption/attenuation or sealing to articles of manufacture such as automotive vehicles.

In a typical application, the adhesive material can assist in providing baffling, adhesion, sealing, acoustical or vibrational damping properties, reinforcement or a combination thereof within a cavity of or upon a surface of a structure, or to one or more members (e.g., a body panel, structural member or other member) of an article of manufacture (e.g., an automotive vehicle).

The adhesive material typically includes a combination of two or more of the following components:
(a) up to about 85 parts by weight of a polymeric material admixture such as an admixture of acrylates, acetates or the like;
(b) up to about 10 parts by weight of a metallic coagent;
(c) optionally, up to about 20 parts by weight epoxy resin;
(d) up to about 20 parts by weight of an additive such as a hydrocarbon resin, a polymeric wax or an oil;
(e) up to about 15 parts by weight blowing agent;
(f) up to about 10 parts by weight curing agent; and
(g) up to about 40 parts by weight filler.

The adhesive material of the present invention may be applied to various articles of manufacture for providing acoustical damping to the articles, for sealing the articles or for providing reinforcement to the articles. Examples of such articles of manufacture include, without limitation, household or industrial appliances, furniture, storage containers, buildings, structures or the like. In preferred embodiments, the adhesive material is applied to portions of an automotive vehicle such as body or frame members (e.g., a vehicle frame rail) of the automotive vehicle or to engine components, exhaust system component, fuel filler and fuel tank components or members associated with these components. One method of the present invention contemplates applying the adhesive material to a surface of one of the above structures in an unexpanded or partially expanded state and activating the material for expanding it to a volume greater than its original volume in the unexpanded state (e.g., 10% greater, 40% greater, 100% greater, 200% greater, 300% greater, 400 % greater, 450% greater or higher).

Percentages herein refer to weight percent, unless otherwise indicated.

### Polymeric Material Admixture

The adhesive material typically includes a polymeric material admixture, which may include a variety of different polymers, such as thermoplastics, elastomers, plastomers, combinations thereof or the like. For example, and without limitation, polymers that might be appropriately incorporated into the polymeric admixture include halogenated polymers, polycarbonates, polyketones, urethanes, polyesters, silanes, sulfones, allyls, olefins, styrenes, epoxies, silicones, phenolics, rubbers, polyphenylene oxides, terphthalates, acetates (e.g., EVA), acrylates, methacrylates (e.g., ethylene methyl acrylate polymer), mixtures thereof or the like. Other potential polymeric materials may be or may include, without limitation, polyethylene, polypropylene, polystyrene, polyolefin, polyacrylate, poly(ethylene oxide), poly(ethyleneimine), polyester, polyurethane, polysiloxane, polyether, polyphosphazine, polyamide, polyimide, polyisobutylene, polyacrylonitrile, poly(vinyl chloride), poly(methyl methacrylate), poly(vinyl acetate), poly(vinylidene chloride), polytetrafluoroethylene, polyisoprene, polyacrylamide, polyacrylic acid, polymethacrylate combinations thereof or the like.

The polymeric admixture typically comprises a substantial portion of the adhesive material (e.g., up to 85% by weight or greater). Preferably, the polymeric admixture comprises about 25% to about 85%, more preferably about 40% to about 75% and even more preferably about 50% to about 70% by weight of the adhesive material.

Although not required, it is preferable for the polymeric admixture to include one or more acrylates. The acrylates may include, for example, simple acrylate, methyl acrylate, ethyl acrylate, butyl acrylate, vinyl acrylate, copolymers or combinations thereof or the like. Moreover, any of these acrylates may include other chemical groups such as epoxy, ethylene, butylene, pentene or the like for forming compounds such as ethylene acrylate, ethylene methyl acrylate and so on, and additionally for forming copolymers or combinations thereof or the like. When included, the one or more acrylates typically comprise about 20% or less to about 75% or greater, more preferably about 30% to about 65% and even more preferably about 40% to about 50% by weight of the polymeric admixture. Advantageously, such acrylates, particularly epoxidized acrylates, such as epoxy/EMA can assist in providing greater adhesion (e.g., greater green state or pre-cure adhesion) of the adhesive material, particularly to surfaces of substrates having impurities such as grease or dirt.

One preferred acrylate is an epoxy modified (e.g., epoxidized) acrylate copolymer or terpolymer, which, although not required, is or preferably becomes tacky at temperatures greater than about 120 °F, greater than about 150 °F or greater than about 180 °F. One example of such a polymer is sold under tradename LOTADER 8950 (i.e., ethylene, methacrylate and glycidyl methacrylate) and is commercially available from Atofina Chemicals Inc., 2000 Market St., Philadelphia PA, 19103-3222. Another example of such a polymer is sold under the tradename ELVALOY 4170 (i.e., ethylene, butyl acrylate and glycidyl methacrylate) and is commercially available from E. I. Dupont De Nemours and Company, 1007 Market Street, Wilmington, Delaware 19898. Another preferred acrylate is an ethylene methacrylate. An example of such a copolymer is sold under the tradename OPTEMA TC 140 and is commercially available from ExxonMobil Chemical, 13501 Katy Freeway, Houston, TX 77079-1398. Still another preferred acrylate is a copolymer or terpolymer including butyl acrylate and methyl acrylate and more particularly a copolymer or terpolymer including an ethylene butyl acrylate and ethylene methyl acrylate. An example of such a copolymer is sold under the tradename LOTRYL 35BA40 and is commercially available from ATOFINA Chemical, Inc., 2000 Market Street, Philadelphia, PA 19103. It is also preferable, although again, not required, that the polymeric admixture include one or more acetates. The acetates may include, for example, acetate, methyl acetate, ethyl acetate, butyl acetate, vinyl acetate, copolymers or combinations thereof or the like. Moreover, any of these acetates may include other chemical groups such as epoxy, ethylene, butylene, pentene or the like for forming compounds such as ethylene acrylate, ethylene methyl acrylate and so on and additionally for forming copolymers or combinations thereof or the like. When included, the one or more acetates typically comprise about 20% or less to about 80% or greater, more preferably about 35% to about 70% and even more preferably about 50% to about 60% by weight of the polymeric admixture.

A preferred acetate is an ethylene vinyl acetate (EVA) having a melt index of between about 2.0 and about 3.0 and a vinyl acetate content of between about 15% and about 22% by weight, such EVA being sold under the tradename ELVAX 460 and being commercially available from E. I. Dupont De Nemours and Company, 1007 Market Street, Wilmington, Delaware 19898. Still another example of an acetate is a relatively high ethylene content EVA sold under the tradename ESCORENE UL-7760, commercially available from ExxonMobil Chemical, 13501 Katy Freeway, Houston, TX 77079-1398. Another example of an acetate is a relatively low molecular weight/low melt viscosity EVA sold under the tradename ESCORENE UL-MV02514, commercially available from Exxon Mobile Chemical, 13501 Katy Freeway, Houston, TX 77079-1398.

For higher expansion levels, it can be desirable to use polymers of lower melting point. For example, it may be desirable to use lower melting point acetates or acrylates to allow greater expansion.

### Epoxy Resin

Generally it is contemplated that the adhesive material may include an epoxy resin. It is also contemplated that the adhesive material may be substantially or entirely free of any epoxy resin. Epoxy resin is used herein to mean any of the conventional dimeric, oligomeric or polymeric epoxy materials containing at least one epoxy functional group. The polymer-based materials may be epoxy containing materials having one or more oxirane rings polymerizable by a ring opening reaction.

The epoxy may be aliphatic, cycloaliphatic, aromatic or the like. The epoxy may be supplied as a solid (e.g., as pellets, chunks, pieces or the like) or a liquid (e.g., an epoxy resin). The epoxy may include an ethylene copolymer or terpolymer that may possess an alpha-olefin. As a copolymer or terpolymer, the polymer is composed of two or three different monomers, i.e., small molecules with high chemical reactivity that are capable of linking up with similar molecules.

Preferably, an epoxy resin is added to the adhesive material to increase adhesion properties of the material. Additionally, the epoxy resin may strengthen cell structure when the adhesive material is a foamable material. One exemplary epoxy resin may be a phenolic resin, which may be a novalac type or other type resin. Other preferred epoxy containing materials may include a bisphenol-A epichlorohydrin ether polymer, or a bisphenol-A epoxy resin which may be modified with butadiene or another polymeric additive.

When used, one or more epoxy resins may make up about 0.1% or less to about 80% or greater, more typically about 2% to about 50% and even more typically about 10% to about 20% of the adhesive material. It is also possible and sometimes desirable for the adhesive material to be substantially free of epoxy resins (e.g., contain less than 10 %, 1% or even less than 0.1% epoxy resin).

### Metallic Coagent

It is preferred for one or more metallic coagents to be included in the adhesive material. As used herein, a metallic coagent refers to any material or compound that includes a first material compounded or otherwise combined with at least one metal component. Exemplary metal components include, without limitation, aluminum, iron, titanium, magnesium, zinc, molybdenum, cobalt, nickel, copper, vanadium, chromium, manganese, platinum, gold, silver, combinations thereof or the like. Exemplary first materials include organic materials, inorganic materials, polymers (e.g., thermoplastics, elastomers, plastomers, combinations thereof or the like), natural materials, synthetic materials combinations thereof or the like. In one embodiment, the metallic coagent is a metallic acrylic or acrylate such as a metallic diacrylate or methacrylate (e.g., dimethacrylate) coagent. One example of such a metallic diacrylate coagent is a powder of zinc diacrylate sold under the tradename Saret 633 commercially available from Sartomer Company, Inc., 502 Thomas Jones Way, Exton, PA 19341. Another preferred metallic diacrylate coagent is a pelletized mixture of ethylene/propylene copolymer and zinc diacrylate sold under the tradename SR75EPM2A also commercially available from Sartomer Company. Still another preferred coagent is a metallic methacrylate coagent, which is a palletized mixture of ethylene/propylene copolymer and zinc dimethacrylate sold under the tradename SR75EPM2M also commercially available from Sartomer Company. Advantageously, the pelletized forms of the coagent may release fewer odors.

When used, the metallic coagent is typically about 0.1% or less to about 30% or greater, more typically about 0.6% to about 10% and even more typically about 1.0% to about 3.0% of the adhesive material. Advantageously, it has been found that the metallic coagent can elevate the resistance of the adhesive material to degradation or loss of adhesion, which can be caused by volatiles such as fuel or others chemicals. It is also contemplated that the metallic coagent can include calcium or may be a calcium coagent.

### Blowing Agent

One or more blowing agents may be added to the expandable material for producing inert gasses that form, as desired, an open and/or closed cellular structure within the adhesive material. In this manner, it may be possible to lower the density of articles fabricated from the material. In addition, the material expansion can help to improve sealing capability, substrate wetting ability, adhesion to a substrate, acoustic damping, combinations thereof or the like.

The blowing agent may include one or more nitrogen containing groups such as amides, amines and the like. Examples of suitable blowing agents include azodicarbonamide, dinitrosopentamethylenetetramine (DNPT), 4,4ᵢ-oxy-bis-(benzenesulphonylhydrazide) (OBSH), trihydrazinotriazine and N, Nᵢ-dimethyl-N,Nᵢ-dinitrosoterephthalamide.

An accelerator for the blowing agents may also be provided in the expandable material. Various accelerators may be used to increase the rate at which the blowing agents form inert gasses. One preferred blowing agent accelerator is a metal salt, or is an oxide, e.g. a metal oxide, such as zinc oxide. Other preferred accelerators include modified and unmodified thiazoles or imidazoles, ureas or the like.

Amounts of blowing agents and blowing agent accelerators can vary widely within the expandable materials depending upon the type of cellular structure desired, the desired amount of expansion of the expandable material, the desired rate of expansion and the like. Exemplary ranges for the amounts of blowing agents, blowing agent accelerators or both together in the expandable material range from about 0.1 % by weight to about 25 %, more preferably about 0.5% to about 8% and even more preferably about 1.2% to about 3% by weight of the adhesive material.

In one embodiment, the present invention contemplates the omission of a blowing agent. Thus it is possible that the material will not be an expandable material. Preferably, the formulation of the present invention is thermally activated. However, other agents may be employed for realizing activation by other means, such as moisture, radiation, or otherwise.

### Curing Agent

One or more curing agents and/or curing agent accelerators may be added to the adhesive material. Amounts of curing agents and curing agent accelerators can, like the blowing agents, vary widely within the adhesive material depending upon the type of cellular structure desired, the desired amount of expansion of the adhesive material, the desired rate of expansion, the desired structural properties of the adhesive material and the like. Exemplary ranges for effective amounts of the curing agents, curing agent accelerators or both together present in the expandable material range from about 0 % by weight to about 7 % by weight.

Preferably, the curing agents assist the adhesive material in curing by crosslinking of the polymers, epoxy resins (e.g., by reacting in stoichiometrically excess amounts of curing agent with the epoxide groups on the resins) or both. It is also preferable for the curing agents to assist in thermosetting the adhesive material. Useful classes of curing agents are materials selected from aliphatic or aromatic amines or their respective adducts, amidoamines, polyamides, cycloaliphatic amines, (e.g., anhydrides, polycarboxylic polyesters, isocyanates, phenol-based resins (such as phenol or cresol novolak resins, copolymers such as those of phenol terpene, polyvinyl phenol, or bisphenol-A formaldehyde copolymers, bishydroxyphenyl alkanes or the like), peroxides or mixtures thereof. Curing agents can also include modified and unmodified polyamines or polyamides such as triethylenetetramine, diethylenetriamine tetraethylenepentamine, cyanoguanidine, dicyandiamides and the like. Exemplary peroxide curing agents include, without limitation, methyl ethyl ketone peroxide, peroxydicarbonate, tertiary-butyl peroxy 2-ethyl hexanoate, benzoyl peroxide, tert-Amyl peroxybenzoate, tert-amyl peroxy-2-ethyl hexanoate, 2,4-pentanedione peroxide, cumyl hydroperoxides, cumene hydroperoxide, di-tertiary-butyl peroxide, combinations thereof or the like. An accelerator for the curing agents (e.g., a modified or unmodified urea such as methylene diphenyl bis urea, an imidazole or a combination thereof, cumene hydroperoxide, di-tertiary-butyl peroxide) may also be provided for preparing the adhesive material. One example of a preferred curing agent is an organic peroxide (e.g., Dicumyl Peroxide) sold under the tradename VAROX DCP-40KE and is commercially available from R.T. Vanderbilt Company, Inc., 30 Winfield Street, Norwalk, CT 06855.

It may also be desirable, particularly when higher expansion levels are desired, to employ a cross-linking agent to cure or assist in curing the adhesive material for providing the adhesive material with increased cross-link density. For example, the adhesive material may include a multi-functional (di-functional or tri-functional) cross-linking agent. Typically, the cross-linking agent will have at least one, but preferably multiple (e.g., 2, 3, 4 or more) branches ending in reaction sites (e.g., double bonds such as C=C double bonds). One example of a preferred cross-linking agent is a Trimethylolpropane Trimethacrylate sold under the tradename SR-350, commercially available from Sartomer Company, Inc., 502 Thomas Jones Way, Exton, PA 19341. Advantageously, such a cross-linking agent can assist the adhesive material in maintaining lap shear strength at higher expansion levels.

### Filler

The adhesive material may also include one or more fillers, including but not limited to particulated materials (e.g., powder), beads, microspheres, or the like. Preferably the filler includes a relatively low-density material that is generally nonreactive with the other components present in the adhesive material.

Examples of fillers include silica, diatomaceous earth, glass, clay, talc, pigments, colorants, glass beads or bubbles, glass, carbon ceramic fibers, antioxidants, and the like. Such fillers, particularly clays, can assist the adhesive material in leveling itself during flow of the material. The clays that may be used as fillers may include clays from the kaolinite, illite, chloritem, smecitite or sepiolite groups, which may be calcined. Examples of suitable fillers include, without limitation, talc, vermiculite, pyrophyllite, sauconite, saponite, nontronite, montmorillonite or mixtures thereof. The clays may also include minor amounts of other ingredients such as carbonates, feldspars, micas and quartz. The fillers may also include ammonium chlorides such as dimethyl ammonium chloride and dimethyl benzyl ammonium chloride. Titanium dioxide might also be employed.

In one preferred embodiment, one or more mineral or stone type fillers such as calcium carbonate, sodium carbonate or the like may be used as fillers. In another preferred embodiment, silicate minerals such as mica may be used as fillers. It has been found that, in addition to performing the normal functions of a filler, silicate minerals and mica in particular improved the impact resistance of the cured expandable material.

When employed, the fillers in the expandable material can range from 1 % to 90 % by weight of the adhesive material. According to some embodiments, the adhesive material may include from about 15 % to about 50 % by weight, and more preferably about 25 % to about 38 % by weight of one or more fillers.

It is contemplated that one of the fillers or other components of the material may be thixotropic for assisting in controlling flow of the material as well as properties such as tensile, compressive or shear strength.

### Additives

A variety of additives, agents or performance modifiers may also be included in the adhesive material as desired, including but not limited to a UV resistant agent, a flame retardant, an impact modifier, a scorch retarder, a heat stabilizer, a UV photoinitiator, a colorant, a processing aid, an anti-oxidant, a lubricant, a coagent, a reinforcement (e.g., chopped or continuous glass, glass fiber, ceramics and ceramic fibers, aramid fibers, aramid pulp, carbon fiber, acrylate fiber, polyamide fiber, polypropylene fibers, combinations thereof or the like). Such additives may be added to the adhesive material alone or as part of or along with another component of the adhesive material. In one preferred embodiment, for example, an acrylate coagent may be employed for enhancing cure density.

In one embodiment, the adhesive material includes a tackifier. A variety of tackifiers or tackifying agents may be included in the adhesive material. Exemplary tackifiers include, without limitation, resins, phenolic resins (e.g., thermoplastic phenolic resins), aromatic resins, synthetic rubbers, alcohols or the like. According to one preferred embodiment, a hydrocarbon resin (e.g., a C5 resin, a C9 resin, a combination thereof or the like) is employed as a tackifier. The hydrocarbon resin may be saturated, unsaturated or partially unsaturated (i.e., have 1, 2, 3 or more degrees of unsaturation). One example of a preferred hydrocarbon resin is a coumarone-indene resin. Another example of a preferred hydrocarbon resin is sold under the tradename NORSOLENE® S-105 and is commercially available from Sartomer Company, Inc., 502 Thomas Jones Way, Exton, PA 19341.

When used, the tackifier preferably comprises about 0.1% or less to about 30% or greater, more preferably about 2% to about 25% and even more preferably about 6% to about 20% by weight of the adhesive material. Advantageously, the tackifier may be able to assist in controlling cure rates for producing a more consistent or predictable expansion for the adhesive material.

Another preferred additive for the adhesive material is a wax. Various waxes such as natural wax, synthetic wax, carnuba wax, candle wax, combinations thereof or the like may be employed in the adhesive material. According to one preferred embodiment, the adhesive material includes a polymeric wax that includes a polymeric base material such as polyethylene, polybutylene, polyester, polyamide, combinations thereof or the like. The polymeric base material may be a homopolymer, a copolymer or the like. The wax may be crystalline, non-crystalline, homogeneous, non-homogeneous, solid, liquid or the like. One particularly preferred polymeric wax is a microcrystalline polyethylene homopolymer wax, which is sold under the tradename Rosswax 3002 and is commercially available from Frank B. Ross Co., Inc. 22 Halladay Street, Jersey City, NJ 07304.

The adhesive material may also include one or more oils, which may be supplied as additives (e.g., surfactants). Such oils may be natural or synthetic. In one preferred embodiment, the adhesive material includes a natural oil extracted from a fruit or vegetable. As an example, the adhesive material may include an oil component such as d-limonene, which is the major component of the oil extracted from citrus rind. When included, the one or more oils are typically present in the adhesive material in an amount ranging from about 0.001% to about 5%, more typically from about 0.01 % to about 1% and even more typically from about 0.05% to about 0.5% by weight of the adhesive material. It is believed without being bound by any theory, that use of such an oil can assist adhesion of the adhesive material to a surface of a substrate by moving or displacing impurities such as dirt and grease from the surface of the substrate.

When determining appropriate components for the adhesive material, it may be important to form the material such that it will only activate (e.g., flow, foam or otherwise change states) at appropriate times or temperatures. For instance, in most applications, it is undesirable for the material to be reactive at room temperature or otherwise at the ambient temperature in a production environment. More typically, the adhesive material becomes activated to flow at higher processing temperatures. As an example, temperatures such as those encountered in an automobile assembly plant may be appropriate, especially when the expandable material is processed along with the other components at elevated temperatures or at higher applied energy levels, e.g., during painting preparation steps. Temperatures encountered in many coating operations (e.g., in a paint or e-coat curing oven), for instance, range up to about 250°C or higher.

For mixing the additives, fillers or both, it may be preferable for the additives or fillers to be mixed with a dispersant prior to mixing them with the other ingredients of the adhesive material. Such a dispersant will typically have a relatively low molecular weight of less than about 100,000 amu, more preferably less than about 50,000 amu and still more preferably less than about 10,000 amu, although not required. Examples of such dispersants include, without limitation, liquid waxes, liquid elastomers or the like such as ethylene-propylene rubber (EPDM), paraffins (e.g., paraffin wax).

### Highly Preferred Embodiments and Examples

It is contemplated within the present invention that polymers or other materials other than those discussed above may also be incorporated into the adhesive material, e.g., by copolymerization, by blending, or otherwise. Below, an exemplary formulation of the adhesive material is provided. Since the formulation is merely exemplary, it is contemplated that the weight percents of the various ingredients may vary by ± 75% or more or by ± 50% or ± 30%. Moreover, ingredients may be added or removed from the formulations.

### EXAMPLE

Table A shows a formulation for one exemplary expandable material.

**TABLE A**

| **Ingredient name:** | **% by weight** |
|---|---|
| Ethylene Vinyl Acetate | 26.00 |
| Epoxy Modified Acrylate Copolymer | 19.00 |
| Ethylene Methacrylate | 3.00 |
| Polyethylene Wax | 1.00 |
| Hydrocarbon resin | 13.80 |
| Metallic coagent | 1.40 |
| Curing agent | 1.20 |
| Blowing agent (e.g., DNPT) | 1.00 |
| Blowing agent (e.g., azodicarbonamide) | 0.45 |
| Blowing agent (e.g., OBSH) | 0.45 |
| Carbon Black | 0.10 |
| Calcium carbonate | 32.50 |
| surfactant | 0.10 |

Table B shows a formulation for another exemplary expandable material.

**TABLE B**

| **Ingredient name:** | **% by weight** |
|---|---|
| Ethylene Vinyl Acetate | 26.00 |
| Epoxy Modified Acrylate Copolymer | 19.00 |
| Ethylene Methacrylate | 3.00 |
| Polyethylene Wax | 1.00 |
| Hydrocarbon resin | 13.80 |
| Metallic coagent | 1.87 |
| Curing agent | 1.20 |
| Blowing agent (e.g., DNPT) | 1.63 |
| Blowing agent (e.g., azodicarbonamide) | 0.50 |
| Blowing agent (e.g., OBSH) | 0.70 |
| Carbon Black | 0.10 |
| Calcium carbonate | 31.10 |
| surfactant | 0.10 |

Table C shows a formulation for another exemplary expandable material.

**TABLE C**

| **Ingredient name:** | **% by weight** |
|---|---|
| Ethylene Vinyl Acetate | 26.00 |
| Epoxy Modified Acrylate Copolymer | 19.00 |
| Ethylene Methacrylate | 3.00 |
| Polyethylene Wax | 1.00 |
| Hydrocarbon resin | 13.80 |
| Metallic coagent | 2.4 |
| Curing agent | 1.20 |
| Blowing agent (e.g., DNPT) | 2.46 |
| Blowing agent (e.g., azodicarbonamide) | 0.50 |
| Blowing agent (e.g., OBSH) | 1.80 |
| Carbon Black | 0.10 |
| Calcium carbonate | 26.91 |
| surfactant | 0.10 |
| Cross-linking Agent | 1.33 |

It should be understood that the formulations of Tables A and B are merely exemplary. It is contemplated that the weight percentages listed can vary by ± 5%, ± 15%, ± 30%, ± 100%, ± 200% or more relative to the above listed values and depending on the particular ingredient that is varied. Thus, a weight percentage of 1.00% can vary by ± 30% to a weight percentage of up to 1.3% or down to 0.7%.

### Formation and Application of the Adhesive Material

Formation of the adhesive material can be accomplished according to a variety of new or known techniques. Preferably, the adhesive material is formed as a material of substantially homogeneous composition. However, it is contemplated that various combining techniques may be used to increase or decrease the concentration of certain components in certain locations of the adhesive material.

According to one embodiment, the adhesive material is formed by supplying the components of the material in solid form such as pellets, chunks and the like, in liquid form or a combination thereof. The components are typically combined in one or more containers such as large bins or other containers. Preferably, the containers can be used to intermix the components by rotating or otherwise moving the container. Thereafter, heat, pressure or a combination thereof may be applied to soften or liquidize the components such that the components can be intermixed by stirring or otherwise into a single homogenous composition.

According to another embodiment, the adhesive material may be formed by heating one or more of the components that is generally easier to soften or liquidize such as the polymer based materials to induce those components into a mixable state. Thereafter, the remaining components may then be intermixed with the softened components. It should be understood that the various ingredients of the adhesive material may be combined in any desired order. Moreover, the component of the polymeric admixture may be mixed together and then added to the other ingredients or may be combined with the other ingredients in any other order.

Depending upon the components used, it may be important to assure that the temperature of the components remain below certain activation temperatures that might cause the adhesive material to activate (e.g., form gasses, flow or otherwise activate), cure (e.g., harden, stiffen or otherwise change states) or both. Notably, when the adhesive material contains a blowing agent, it is typically desirable to maintain the temperature of the adhesive material below a temperature that will activate the blowing agent during formation of the adhesive material or before the adhesive material is applied to a surface.

In situations where it is desirable to maintain the adhesive material at lower temperatures it may be desirable to maintain the components in a semi-solid or viscoelastic state using pressure or a combination of pressure and heat to intermix the components of the adhesive material. Various machines have been designed to apply heat, pressure or both to materials. One preferred machine is an extruder. According to one embodiment of the present invention, various components may be premixed into one, two or more pre-mixtures and introduced at one or various locations in a single or twin-screw extruder. Thereafter, the heat and pressure provided by the extruder mixes the adhesive material in a single generally homogeneous composition, and preferably does so without activating the material.

Activation of the material may include at least some degree of foaming or bubbling in situations where the adhesive material includes a blowing agent. Such foaming or bubbling can assist the adhesive material in wetting a substrate and forming an intimate bond with the substrate. Alternatively, however, it shall be recognized that the adhesive material may be activated to flow without foaming or bubbling and may still substantially wet the substrate to form an intimate bond. Formation of the intimate bond will typically but not necessarily occur upon curing of the adhesive material. In one embodiment, a robotic extrusion applicator is employed, e.g., of the type disclosed in U.S. Patent No. 5,358,397, hereby incorporated by reference.

### Application

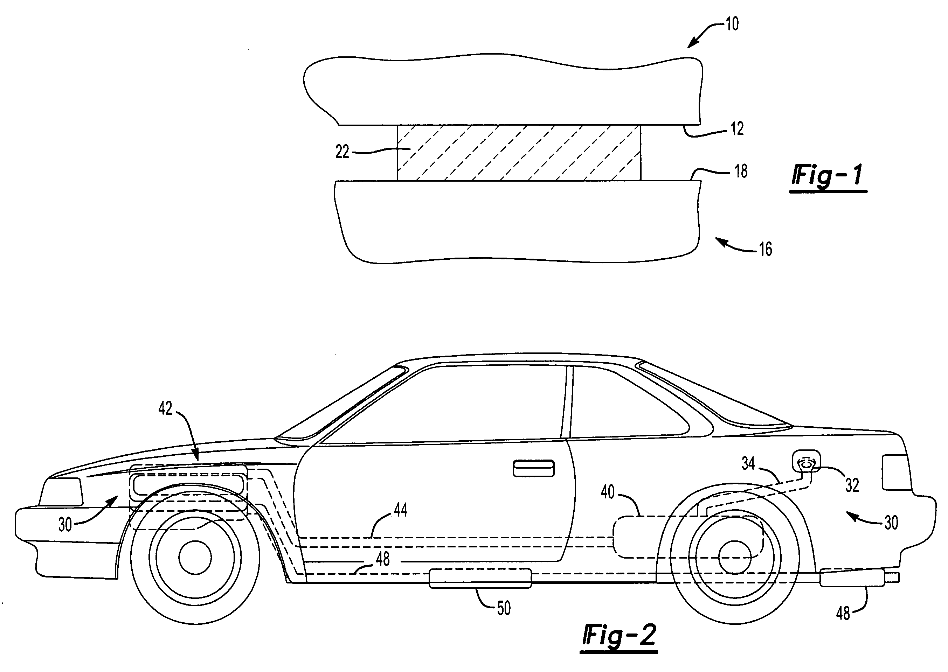

As discussed, the adhesive material may be used for a variety of purposes. In one preferred embodiment, the adhesive material is employed to adhere a first component to a second component. Referring to Fig. 1, there is illustrated a first component 10 having a surface 12 and a second component 16 having a surface 18. It should be understood that the first component 10 and second component 16 may be part of multiple members or a single member of an article of manufacture such as an automotive vehicle.

As can be seen, adhesive material 22 is disposed between and adhered to the surface 12 of the first component 10 and the surface 18 of the second component 16. The adhesive material 22 may be disposed between the surfaces 12, 18 by applying the material 22 to either or both of the surfaces 12, 18 followed by moving the surfaces 12, 18 toward each other. Alternatively, the surfaces 12, 18 may be placed adjacent to each other and the adhesive material 22 may be injected therebetween. Moreover, either of these application methods may be carried out using the robotic extrusion applicator as previously discussed.

Advantageously, it has been found that particular embodiments of the adhesive material of the present invention can maintain high levels of adhesion even after exposure to volatile substances (e.g., automotive or other fuel such as liquid hydrocarbons). Thus, the adhesive material can be advantageously employed to adhere components of automotive vehicles together at locations where the components, the adhesive material or both will be exposed to the fuel, oil or other volatile substances of the automotive vehicles. Referring to Fig. 2, there is illustrated an exemplary automotive vehicle having various components, which may be adhered together with the adhesive material as described with reference to Fig. 1. It is contemplated that the components may be different (e.g., a fuel tank and a fuel filler tube) or alike (a first fuel filler tube and a second fuel filler tube). As examples, it is contemplated that any of the following components of Fig. 1 may be adhered to one another: body panels 30; fuel filler cup 32; fuel filler tubes 34; a fuel tank 40; engine components 42; connector tubes 44 between the fuel tank 40 and the engine components 42; exhaust system components such as exhaust tubes 48 or mufflers 50; various combinations thereof; or the like.

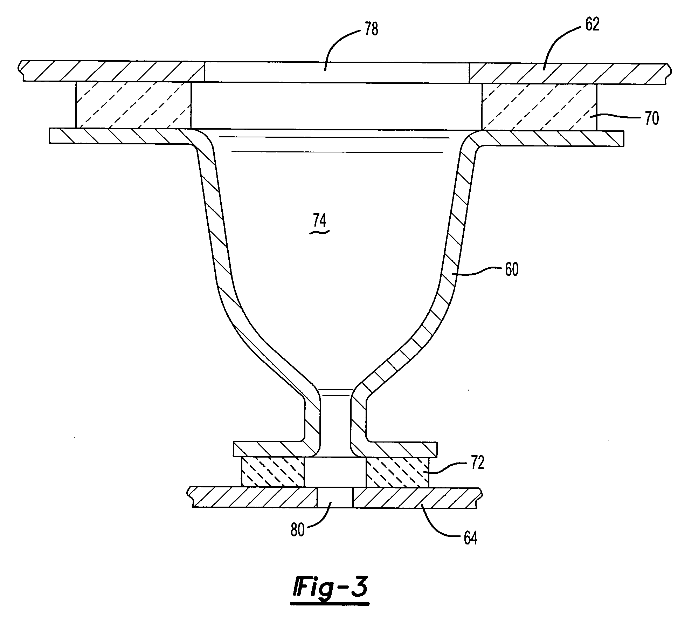

In one particularly preferred embodiment, it is contemplated that one component is adhered to one or multiple other components. In Fig. 3, a first component is shown as an annular fuel filler member 60 (e.g., a plastic or metal fuel filler cup), which is adhered to a second component 62 and a third component 64 respectively with a first seal 70 and a second seal 72 (e.g., annular seals) formed of the adhesive material of the present invention. Preferably, the filler member 60 defines an opening 74 for the passage of fuel therethrough.

The second component 62 is illustrated as a body side outer panel of an automotive vehicle. In alternative embodiments, however, the second component 62 may be a component of a variety of articles of manufacture or may be a different component of an automotive vehicle. As an alternative, for example, the first component may be a body side inner panel of an automotive vehicle. Preferably, the first component 62 includes a first surface opposite a second surface. It is also preferable for the first component 62 to define an opening 78 (e.g., a through-hole) for receipt of fuel therethrough.

The second component 64 is illustrated as a wheelhouse of the automotive vehicle. Alternatively, it is contemplated that the second component may be a component of a variety of articles of manufacture or may be a different component of an automotive vehicle. In exemplary alternatives, the second component may be an inner body panel of an automotive vehicle, a frame member of a vehicle or the like. Preferably, the second component 64 also includes a first surface opposite a second surface. The second component 64 also preferably defines an opening 80 (e.g., a through-hole) for receipt of fuel (e.g., gasoline) therethrough.

Other applications for which the present technology may be adapted or employed as an expandable material include those of the type identified in U.S. Patent Nos. 6,358,584; 6,311,452; 6,296,298, all of which are hereby incorporated by reference. The material of the present invention may thus be applied to a carrier, such as a molded, extruded or stamped member (e.g., metal or plastic, foamed or unfoamed; exemplary materials of which include aluminum, magnesium, titanium, steel, polyamide (e.g., nylon 6 or nylon 6,6), polysulfone, thermoplastic imide, polyether imide, polyether sulfone or mixtures thereof). Whether applied to a carrier or applied by itself, the material may be applied to components of a vehicle such as pillars, frame components, body components, engine components, decklids, doors, frame rails, bumpers, wheel wells, combinations thereof or the like.

Advantageously, certain embodiments of the adhesive material of the present invention have exhibited particularly desirable physical properties. For example, at least one embodiment of the adhesive material has exhibited low loss of shear strength after fuel soak. Thus, embodiments of the adhesive material can exhibit less than a 60 % loss, less than a 50 % loss and even less than a 40 % loss in lap shear strength after a fuel soak (e.g., a gasoline soak) of greater than 1, 2, 3, 4 or more hours. As another example, at least one embodiment of the adhesive material has exhibited high adhesion such that the material exhibits cohesive failure prior to exhibiting adhesive failure even after a fuel soak of greater than 1, 2, 3, 4 or more hours.

Unless stated otherwise, dimensions and geometries of the various structures depicted herein are not intended to be restrictive of the invention, and other dimensions or geometries are possible. Plural structural components can be provided by a single integrated structure. Alternatively, a single integrated structure might be divided into separate plural components. In addition, while a feature of the present invention may have been described in the context of only one of the illustrated embodiments, such feature may be combined with one or more other features of other embodiments, for any given application. It will also be appreciated from the above that the fabrication of the unique structures herein and the operation thereof also constitute methods in accordance with the present invention.

The preferred embodiment of the present invention has been disclosed. A person of ordinary skill in the art would realize however, that certain modifications would come within the teachings of this invention. Therefore, the following claims should be studied to determine the true scope and content of the invention.

## Claims

1. An adhesive material, comprising:
about 25 % to about 85% by weight of a polymeric admixture, the polymeric admixture including one or more acetates or one or more acrylates;
one or more curing agents;
one or more fillers; and
a metallic coagent, the metal coagent being a metal acrylate.

2. An adhesive material as in claim 1 wherein the metallic coagent is selected from zinc diacrylate or zinc methacrylate.

3. An adhesive material as in claim 1 or 2 wherein the metallic coagent is provided as pellets that also include an ethylene/propylene copolymer and wherein the metallic coagent is about 0.6% to about 10% of the adhesive material.

4. An adhesive material as in claim 1, 2 or 3 wherein the polymeric admixture includes one or more acetates and the one or more acetates include ethylene vinyl acetate in the range of about 30 to about 70 weight percent of the polymeric admixture.

5. An adhesive material as in claim 1, 2, 3 or 4 wherein the polymeric admixture includes the one or more acrylates are in the range of about 30 to about 65 weight percent of the polymeric admixture and wherein the one or more acrylates include an epoxy modified acrylate copolymer.

6. An adhesive material as in claim 5 wherein the epoxy modified acrylate copolymer becomes tacky at a temperature greater than about 150 °F.

7. An adhesive material as in any of claims 1-6 further comprising one or more blowing agents wherein the one or more blowing agents represent about 0.5% to about 8% by weight of the adhesive material and the one or more blowing agents include an amide, an amine or a hydrazide.

8. An adhesive material as in claim 7 wherein the one or more blowing agents including at least two of:
i. an azodicarbonamide;
ii. a dinitrosopentamethylenetriamine; and
iii. a benzenesulphonylhydrazide.

9. An adhesive material as in any of claims 1-8 wherein the one or more curing agents include a peroxide based curing agent.

10. An adhesive material as in any of claims 1-9 further comprising a multi-functional cross-linking agent.

11. An adhesive material as in claim 10 wherein the multi-functional cross-linking agent is a tri-functional cross-linking agent referred to as trimethylolpropane trimethacrylate.

12. An adhesive material as in any of claims 1-11 further comprising one or more additives including a polyethylene wax and a pigment.

13. An adhesive material as in any of claims 1-12 wherein the adhesive material expands to a volume that is 10% greater than it original unexpanded volume upon exposure to a temperature of 250 °C or greater.

14. An adhesive material as in any of claims 1-12 wherein the adhesive material expands to a volume that is 200% greater than it original unexpanded volume upon exposure to a temperature of 250 °C or greater.

15. An adhesive material as in any of claims 1-12 wherein the adhesive material expands to a volume that is 400% greater than it original unexpanded volume upon exposure to a temperature of 250 °C or greater.

16. An adhesive material as in any of claims 1-15 further comprising a tackifier that is about 2% to about 25% of the adhesive material, the tackifier being a hydrocarbon resin.

17. An adhesive material as in any of claims 1-16 wherein the one or more fillers represent about 15% to about 50% by weight of the adhesive material.
